# EUROPEAN PATENT APPLICATION

(11) **EP 2 022 563 A1**
(43) Date of publication of application: **11.02.2009**
(21) Application number: 07744329.9
(22) Date of filing: 29.05.2007
(51) Int. Cl.: B01J 23/58, B01D 53/86, B01D 53/94, B01J 35/04, F01N 3/02, F01N 3/28

(54) **EXHAUST GAS PURIFICATION CATALYST**

(30) Priority: 29.05.2006 JP 2006148094
(71) Applicant: Cataler Corporation, Kakegawa-shi Shizuoka 437-1492 (JP)
(72) Inventor: ENDO, Takayuki, Kakegawa-shi, Shizuoka 437-1492 (JP); TSUJI, Makoto, Kakegawa-shi, Shizuoka 437-1492 (JP); AONO, Norihiko, Kakegawa-shi, Shizuoka 437-1492 (JP)
(74) Representative: Luderschmidt, Schüler & Partner
(86) International application number: PCT/JP2007/060910
(87) International publication number: WO 2007/139113

(57) **Abstract**

An ability of oxidizing CO and HC is improved, while achieving a sufficient efficiency of burning PM. An exhaust gas-purifying catalyst includes a filter substrate (1) in which upstream and downstream cells (13a, 13b) separated by a porous wall (11) are formed, the upstream cell (13a) being open on an upstream side of the filter substrate (1) and closed on a downstream side of the filter substrate (1), and the downstream cell (13b) being closed on the upstream side and open on the downstream side, a precious metal supported by the filter substrate (1), and an alkaline metal and/or alkaline-earth metal supported by the filter substrate (1). A support amount of the alkaline metal and/or alkaline-earth metal per unit volume of the filter substrate (1) is greater in an upstream section (1a) of the filter substrate (1) than in a downstream section (1b) of the filter substrate (1).

## Description

### Technical Field

The present invention relates to an exhaust gas-purifying catalyst, in particular, to an exhaust gas-purifying catalyst used as a wall-flow diesel particulate filter (DPF).

### Background Art

A wall-flow DPF has a structure in which some through-holes of the honeycomb support are close on the upstream side and the remainder of the through-holes are closed on the downstream side. The DPF is used, for example, in an automotive vehicle having a diesel engine and plays a role in reductions of nitrogen oxides (NO_{X}), oxidations of carbon monoxide (CO) and hydrocarbons (HC), removal of particulate matter (PM), etc.

As described in JP-A 2004-19498 (KOKAI), the openings of the wall-flow DPF on the upstream side are prone to be clogged due to the adhesion of the PM. Thus, in order to prevent the clogging, fuel is supplied periodically or continuously to the DPF so as to burn the PM, for example.

Since fuel is used for burning the PM, the particular method has an impact on the fuel consumption of the automotive vehicle. Therefore, it would come to mind that an amount of alkali metal and/or alkaline-earth metal supported by the DPF is increased in order to make it possible to remove the PM from the DPF with a smaller fuel consumption. However, in this case, the ability of the DPF to oxidize CO and HC may be lowered, although the PM can be burned with a smaller amount of fuel.

### Disclosure of Invention

An object of the present invention is to provide an exhaust gas-purifying catalyst that achieves a sufficient efficiency of burning the PM and has an excellent performance of oxidizing CO and HC.

According to an aspect of the present invention, there is provided an exhaust gas-purifying catalyst comprising a filter substrate in which upstream and downstream cells separated by a porous wall are formed, the upstream cell being open on an upstream side of the filter substrate and closed on a downstream side of the filter substrate, and the downstream cell being closed on the upstream side and open on the downstream side, a precious metal supported by the filter substrate, and an alkaline metal and/or alkaline-earth metal supported by the filter substrate, a support amount of the alkaline metal and/or alkaline-earth metal per unit volume of the filter substrate being greater in an upstream section of the filter substrate than in a downstream section of the filter substrate.

### Brief Description of Drawing

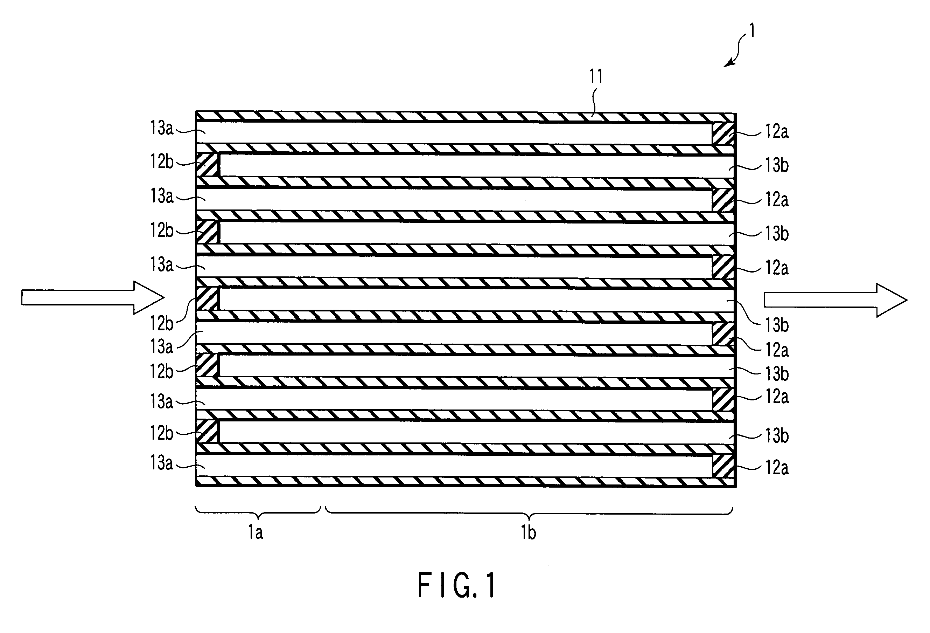

FIG. 1 is a cross-sectional view schematically showing an exhaust gas-purifying catalyst according to an embodiment of the present invention.

### Best Mode for Carrying Out the Invention

An embodiment of the present invention will be described below.

FIG. 1 is a cross-sectional view schematically showing an exhaust gas-purifying catalyst according to an embodiment of the present invention. The exhaust gas-purifying catalyst is a wall-flow DPF and used, for example, in order to purifying an exhaust gas emitted by a diesel engine.

Note that the direction of the exhaust gas flow is depicted in FIG. 1 as an arrow outline with a blank inside. The terms "upstream" and "downstream" are used on the basis of the direction of the exhaust gas flow.

The exhaust gas-purifying catalyst includes a filter substrate 1. The filter substrate 1 includes a honeycomb support 11 and plugs 12a and 12b.

Typically, the honeycomb support 11 is columnar. In this case, the honeycomb support 11 is disposed such that its cylindrical surface or the lateral surface is almost parallel with the flow of the exhaust gas.

The honeycomb support 11 includes a porous wall. The porous wall forms holes each extending in the direction almost parallel with the flow of the exhaust gas.

As the materials of the honeycomb support 11, refractory ceramics are used, for example. As the refractory ceramics, cordierite or silicon carbide is used, for example. A nonwoven fabric made of metal may be laid in the honeycomb support 11.

The plugs 12a block some holes of the honeycomb support 11 on the downstream side. The plugs 12b block the remainder of the holes of the honeycomb support 11 on the upstream side.

The plugs 12a and 12b are arranged such that the hole blocked with the plug 12a and the hole blocked with the plug 12b are adjacent to each other with the porous wall interposed therebetween and such that the plug 12b is located upstream of the plug 12a. Although the plugs 12a are placed at the end of the honeycomb support 11 on the downstream side in FIG. 1, the plugs 12a may be placed at positions spaced apart from the end of the honeycomb support 11 on the downstream side. Similarly, although the plugs 12b are placed at the end of the honeycomb support 11 on the upstream side in FIG. 1, the plugs 12b may be placed at positions spaced apart from the end of the honeycomb support 11 on the upstream side.

As the materials of the plugs 12a and 12b, refractory ceramics are used, for example. As the refractory ceramics, cordierite or silicon carbide is used, for example.

The plugs 12a and the porous wall form upstream cells 13a open at the upstream side. The plugs 12b and the porous wall form downstream cells 13b open at the downstream side. The upstream cell 13a and the downstream cell 13b are adjacent to each other with the porous wall interposed therebetween.

The filter substrate 1 supports a precious metal. Typically, an oxide particle layer including oxide particles is formed on the filter substrate 1, and the precious metal is supported by the oxide particles. The precious metal may be supported by the oxide particles prior to forming the oxide particle layer or may be supported by the oxide particles after forming the oxide particle layer.

As the precious metal, an element of platinum group such as platinum, rhodium or palladium can be used, for example. As the material of the oxide particles, an oxide of a transition metal, an oxide of rare-earth element, a composite oxide containing a transition metal and/or a rare-earth element can be used, for example. For example, as the material of the oxide particles, alumina, zirconia, ceria, titania, silica, or a composite oxide containing them may be used.

An amount of the precious metal supported by unit volume of the filter substrate 1 (hereinafter referred to as "support amount of precious metal") may be uniform in all the parts of the filter substrate 1. Alternatively, the support amount of precious metal may be larger on the downstream side of the filter substrate 1 than on the upstream side. For example, the support amount of precious metal in the downstream section 1b of the filter substrate 1 may be larger than the support amount of precious metal in the upstream section 1a of the filter substrate 1. In this case, the upstream section 1a of the filter substrate 1 may or may not support a precious metal.

The filter substrate 1 further supports an alkali metal and/or alkaline-earth metal. As the alkali metal and/or alkaline-earth metal, potassium, sodium, cesium, lithium, barium, calcium, magnesium, strontium, or a mixture thereof can be used, for example.

In the upstream section 1a of the filter substrate 1, a support amount of alkali metal and/or alkaline-earth metal per unit volume is larger than that in the downstream section 1b. The downstream section 1b of the filter substrate 1 may or may not support an alkali metal and/or alkaline-earth metal.

The exhaust gas-purifying catalyst purifies an exhaust gas emitted, for example, by a diesel engine as follows.

First, an exhaust gas flows into the upstream cells 13a. On this occasion, the porous wall that separates the upstream cell 13a and the downstream cell 13b from each other allows only the exhaust gas to permeate without allowing the PM contained in the exhaust gas to permeate, and the exhaust gas that has permeated the porous wall reaches the downstream cells 13b.

The precious metal supported by the filter substrate 1 promotes the oxidations of CO and HC contained in the exhaust gas as well as the reductions of NO_{X} contained in the exhaust gas. On the other hand, the alkali metal and/or alkaline-earth metal supported by the filter substrate 1 promote burning of the PM and play a role in storing NO_{X}. Therefore, the exhaust gas is purified by passing through the upstream cell 13a and the downstream cell 13b.

As described above, in the exhaust gas-purifying catalyst, the upstream section 1a is larger than the downstream section 1b in the support amount of the alkali metal and/or alkaline-earth metal per unit volume. Since a larger amount of the PM adheres in the vicinity of the upstream end, this particular structure can realize a high efficiency of burning the PM.

In addition, when the precious metal is used in the presence of the alkali metal and/or alkaline-earth metal, its ability of oxidizing CO and HC is lowered. Since the support amount of the alkali metal and/or alkaline-earth metal per unit volume is smaller in the downstream section 1b, the particular structure can realize a high ability of oxidization.

It is preferred that the support amount of the alkali metal and/or alkaline-earth metal per unit volume in the upstream section 1a is at least three times that in the downstream section 1b.

Longer the upstream section 1a supporting a larger amount of the alkali metal and/or alkaline-earth metal, the support amount of the alkali metal and/or alkaline-earth metal becomes larger, and as a result, the efficiency of burning the PM is increased. Thus, when the total length of the exhaust gas-purifying catalyst is assumed to be 1, the length of the upstream section 1a is preferably 1/10 or more, and more preferably 1/5 or more. However, longer the upstream section 1a, the proportion of the precious metal that is covered with the alkali metal and/or alkaline-earth metal becomes higher. Thus, the CO-purifying ability and the HC-purifying ability become much prone to be lowered. Therefore, when the total length of the exhaust gas-purifying catalyst is assumed to be 1, it is preferred that the length of the upstream section 1a is 1/2 or less.

The support amount of the alkali metal and/or alkaline-earth metal per unit volume of the upstream section 1a is, for example, 0.01 mol/L or more, and preferably 0.1 mol/L or more.

Examples of the present invention will be described below.

### <Example 1>

In this example, the exhaust gas-purifying catalyst is manufactured by the following method.

First, a columnar filter substrate 1 made of cordierite was prepared. The filter substrate 1 used herein had a diameter of 129 mm, length of 150 mm, and volume of 1960 cc. The thickness of the porous wall was 300 µm, and each density of the upstream cells 13a and the downstream cells 13b was 150 cells per unit square inches.

Next, the whole filter substrate 1 was wash-coated with slurry containing Al₂O₃ powder, and the resulting coating film was dried and fired. Thus, the oxide particle layer was formed. Note that the support amount of the oxide particle layer was 50g per 1L of the filter substrate 1.

Then, platinum was loaded to the oxide particle layer by impregnation loading method using a solution of dinitrodiamine platinum nitrate. The platinum was loaded almost uniformly to the filter substrate 1. Also, the support amount of the platinum was set at 1g per 1L of the filter substrate 1.

Thereafter, potassium was loaded to the oxide particle layer by impregnation loading method using potassium nitrate. The potassium was loaded only to the parts of the filter substrate 1 whose distances from one end thereof are 30 mm or less. That is, the length of the upstream section 1a was set at 30 mm, and the length of the downstream section 1b was set at 120 mm. Also, the support amount of potassium in the upstream section 1a was set at 0.1 mol per 1L of the filter substrate 1.

The exhaust gas-purifying catalyst shown in FIG. 1 was thus obtained. Hereinafter, the exhaust gas-purifying catalyst is referred to as Sample (1).

### <Example 2>

The exhaust gas-purifying catalyst shown in FIG. 1 was manufactured by the same method as described in Example 1 except that the length of the upstream section 1a was set at 50 mm and the length of the downstream section 1b was set at 100 mm. Hereinafter, the exhaust gas-purifying catalyst is referred to as Sample (2).

### <Example 3>

The exhaust gas-purifying catalyst shown in FIG. 1 was manufactured by the same method as described in Example 1 except that each length of the upstream section 1a and the downstream section 1b was set at 75 mm. Hereinafter, the exhaust gas-purifying catalyst is referred to as Sample (3).

### <Example 4>

The exhaust gas-purifying catalyst shown in FIG. 1 was manufactured by the same method as described in Example 1 except that the length of the upstream section 1a was set at 100 mm and the length of the downstream section 1b was set at 50 mm. Hereinafter, the exhaust gas-purifying catalyst is referred to as Sample (4).

### <Example 5>

The exhaust gas-purifying catalyst shown in FIG. 1 was manufactured by the same method as described in Example 1 except that the support amount of potassium in the upstream section 1a was set at 0.5 mol per 1L of the filter substrate 1. Hereinafter, the exhaust gas-purifying catalyst is referred to as Sample (5).

### <Example 6>

The exhaust gas-purifying catalyst shown in FIG. 1 was manufactured by the same method as described in Example 1 except that the support amount of potassium in the upstream section 1a was set at 0.3 mol per 1L of the filter substrate 1. Hereinafter, the exhaust gas-purifying catalyst is referred to as Sample (6).

### <Example 7>

The exhaust gas-purifying catalyst shown in FIG. 1 was manufactured by the same method as described in Example 1 except that the support amount of potassium in the upstream section 1a was set at 0.15 mol per 1L of the filter substrate 1. Hereinafter, the exhaust gas-purifying catalyst is referred to as Sample (7).

### <Example 8>

The exhaust gas-purifying catalyst shown in FIG. 1 was manufactured by the same method as described in Example 1 except that potassium was loaded to the downstream section 1b in addition to the upstream section 1a. In this example, the support amount of potassium in the upstream section 1a was set at 0.1 mol per 1L of the filter substrate 1, and the support amount of potassium in the downstream section 1b was set at 0.01 mol per 1L of the filter substrate 1. That is, the support amount of potassium in the upstream section 1a was set at 10 times the support amount of potassium in the downstream section 1b. Hereinafter, the exhaust gas-purifying catalyst is referred to as Sample (8).

### <Example 9>

The exhaust gas-purifying catalyst shown in FIG. 1 was manufactured by the same method as described in Example 1 except that potassium was loaded to the downstream section 1b in addition to the upstream section 1a. In this example, the support amount of potassium in the upstream section 1a was set at 0.1 mol per 1L of the filter substrate 1, and the support amount of potassium in the downstream section 1b was set at 0.02 mol per 1L of the filter substrate 1. That is, the support amount of potassium in the upstream section 1a was set at 5 times the support amount of potassium in the downstream section 1b. Hereinafter, the exhaust gas-purifying catalyst is referred to as Sample (9).

### <Example 10>

The exhaust gas-purifying catalyst shown in FIG. 1 was manufactured by the same method as described in Example 1 except that potassium was loaded to the downstream section 1b in addition to the upstream section 1a. In this example, the support amount of potassium in the upstream section 1a was set at 0.1 mol per 1L of the filter substrate 1, and the support amount of potassium in the downstream section 1b was set at 0.033 mol per 1L of the filter substrate 1. That is, the support amount of potassium in the upstream section 1a was set at 3 times the support amount of potassium in the downstream section 1b. Hereinafter, the exhaust gas-purifying catalyst is referred to as Sample (10).

### <Example 11>

The exhaust gas-purifying catalyst shown in FIG. 1 was manufactured by the same method as described in Example 1 except that potassium was loaded to the downstream section 1b in addition to the upstream section 1a. In this example, the support amount of potassium in the upstream section 1a was set at 0.1 mol per 1L of the filter substrate 1, and the support amount of potassium in the downstream section 1b was set at 0.067 mol per 1L of the filter substrate 1. That is, the support amount of potassium in the upstream section 1a was set at 1.5 times the support amount of potassium in the downstream section 1b. Hereinafter, the exhaust gas-purifying catalyst is referred to as Sample (11).

### <Comparative example 1>

The exhaust gas-purifying catalyst shown in FIG. 1 was manufactured by the same method as described in Example 1 except that potassium was not loaded to the oxide particle layer. Hereinafter, the exhaust gas-purifying catalyst is referred to as Comparative sample (1).

### <Comparative example 2>

The exhaust gas-purifying catalyst shown in FIG. 1 was manufactured by the same method as described in Example 1 except that potassium was loaded to the entire filter substrate 1. Note that the support amount of potassium was set at 0.1 mol per 1L of the filter substrate 1. Hereinafter, the exhaust gas-purifying catalyst is referred to as Comparative sample (2).

The Samples (1) to (12) and the Comparative samples (1) and (2) thus obtained were subjected to a PM burning test, oxidation activity test, and NOₓ-storage capacity test.

The PM burning test was carried out by the following method. That is, each of the Samples (1) to (11) and the Comparative samples (1) and (2) was mounted to an exhaust system of a supercharging direct-injection diesel engine having a piston displacement of 2000 cc, and the engine was driven for a predetermined period under the same conditions. By this operation, a predetermined amount of PM was adhered to each of the samples. Next, each sample was heated at 300°C for 2 hours using an electric furnace, so as to remove soluble organic fractions (SOF) from the PM. That is, only the soot was remained on each of the samples.

Then, a cylindrical column having a diameter of 30 mm and a height of 50 mm was cut away as a sample for PM burning test from each sample. Specifically, from each of the Samples (1) to (11), the sample for PM burning test was cut away such that the axis of the sample for PM burning test coincide with the axis of the sample prior to cutting away and the center of the sample for PM burning test is located on the boundary between the upstream section 1a and the downstream section 1b. Also, from each of the Comparative samples (1) and (2), the sample for PM burning test was cut away such that the axis and center of the sample for PM burning test coincide with the axis and center of the sample prior to cutting away, respectively.

Thereafter, each sample for PM burning test was mounted to a PM burning test apparatus, and each sample was subjected to a temperature rise from 100°C to 600°C at a speed of 10 °C/min while flowing a mixed gas of oxygen (O₂), carbon monoxide (CO) and nitrogen (N₂) as a model gas. Thus, the temperature at which the soot started to burn was determined on each sample. Hereinafter, the temperature is referred to as PM-burning temperature.

The oxidation activity test was carried out by the following method. That is, each of the Samples (1) to (11) and the Comparative samples (1) and (2) was mounted to an exhaust system of a supercharging direct-injection diesel engine having a piston displacement of 2000 cc. Then, the torque was increased while keeping the engine speed at 1500 rpm, so as to raise the catalyst bed temperature of each sample from 100°C to 400°C. Thus, the lowest temperatures at which 50% of HC and CO contained in the exhaust gas were oxidized were determined. Hereinafter, the lowest temperature at which 50% of HC is oxidized is referred to as HC-purifying temperature, and the lowest temperature at which 50% of CO is oxidized is referred to as CO-purifying temperature.

The NO_{X}-storage capacity test was carried out by the following method. That is, each of the Samples (1) to (11) and the Comparative samples (1) and (2) was mounted to an exhaust system of a supercharging direct-injection diesel engine having a piston displacement of 2000 cc. Then, the engine was driven under the conditions that set the catalyst bed temperature of each sample at 350°C, and the maximum amount of NOₓ that each sample could store was determined at this temperature. Hereinafter, the maximum amount is referred to as NOₓ-storage amount.

The results of the PM-burning test, oxidation activity test and NOₓ-storage capacity test are summarized in the following TABLES 1 to 3.

**TABLE 1**

| | Sample | | | | Comparative sample | |
|---|---|---|---|---|---|---|
| | (1) | (2) | (3) | (4) | (1) | (2) |
| Length of upstream section (mm) | 30 | 50 | 75 | 100 | 0 | 150 |
| Support amount of K in upstream section (mol/L) | 0.1 | 0.1 | 0.1 | 0.1 | - | 0.1 |
| Length of downstream section (mm) | 120 | 100 | 75 | 50 | 150 | 0 |
| Support amount of K in downstream section (mol/L) | 0 | 0 | 0 | 0 | 0 | - |
| PM-burning temperature (°C) | 386 | 350 | 353 | 342 | 550 | 345 |
| CO-purifying temperature (°C) | 185 | 185 | 193 | 204 | 173 | 250 |
| HC-purifying temperature (°C) | 198 | 202 | 208.5 | 225 | 192 | 259 |
| NO_{X}-storage amount (g/L) | 1.00 | 1.06 | 1.3 | 1.22 | 0.04 | 1.34 |

**TABLE 2**

| | Sample | | | Comparative sample | |
|---|---|---|---|---|---|
| | (5) | (6) | (7) | (1) | (2) |
| Length of upstream section (mm) | 30 | 30 | 30 | 0 | 150 |
| Support amount of K in upstream section (mol/L) | 0.5 | 0.3 | 0.15 | - | 0.1 |
| Length of downstream section (mm) | 120 | 120 | 120 | 150 | 0 |
| Support amount of K in downstream section (mol/L) | 0 | 0 | 0 | 0 | - |
| PM-burning temperature (°C) | 329 | 345 | 377 | 550 | 345 |
| CO-purifying temperature (°C) | 186 | 185 | 180 | 173 | 250 |
| HC-purifying temperature (°C) | 191 | 193 | 195 | 192 | 257 |
| NO_{X}-storage amount (g/L) | 1.43 | 1.32 | 1.04 | 0.04 | 1.34 |

**TABLE 3**

| | Sample | | | | Comparative sample | |
|---|---|---|---|---|---|---|
| | (8) | (9) | (10) | (11) | (1) | (2) |
| Length of upstream section (mm) | 30 | 30 | 30 | 30 | 0 | 150 |
| Support amount of K in upstream section (mol/L) | 0.1 | 0.1 | 0.1 | 0.1 | - | 0.1 |
| Length of downstream section (mm) | 120 | 120 | 120 | 120 | 150 | 0 |
| Support amount of K in downstream section (mol/L) | 0.01 | 0.02 | 0.033 | 0.067 | 0 | - |
| PM-burning temperature (°C) | 356 | 350 | 348 | 345 | 550 | 345 |
| CO-purifying temperature (°C) | 183 | 185 | 187 | 218 | 173 | 250 |
| HC-purifying temperature (°C) | 192 | 193 | 194 | 222 | 192 | 259 |
| NO_{X}-storage amount (g/L) | 1.04 | 1.16 | 1.11 | 1.35 | 0.04 | 1.34 |

As shown in TABLES 1 to 3, the Comparative sample (1) is significantly high in the PM-burning temperature and significantly small in the NO_{X}-storage amount, although the HC-purifying temperature and the CO-purifying temperature are relatively low. On the other hand, the Comparative sample (2) is high in the HC-purifying temperature and the CO-purifying temperature, although the PM-burning temperature is low and the NOₓ-storage amount is large. In contrast, the Samples (1) to (11) are sufficiently low in the PM-burning temperature, HC-purifying temperature and CO-purifying temperature and are large in the NO_{X}-storage amount. That is, when the support amount of potassium in the upstream section 1a is set larger than the support amount of potassium in the downstream section 1b, it is possible to sufficiently lower the PM-burning temperature, HC-purifying temperature and CO-purifying temperature and sufficiently increase the NO_{X}-storage amount.

As shown in TABLE 1, as compared to the Comparative sample (2), the Samples (1) to (4) are almost at the same level in the NO_{X}-storage amount and are lower in the HC-purifying temperature and the CO-purifying temperature. This reveals that the ratio of the length of the upstream section 1a with respect to the length of the downstream 1b has an influence on the HC-purifying temperature and the CO-purifying temperature.

As shown in TABLE 2, the Samples (5) to (7) are lower in the PM-burning temperature as compared to the Comparative sample (1). In addition, the Samples (5) and (6) are lower in the PM-burning temperature as compared to the Sample (7), and the Sample (5) is lower in the PM-burning temperature as compared to the Sample (6). Thus, when the support amount of potassium in the upstream section 1a is increased, the PM-burning temperature is lowered.

As shown in TABLE 3, the Samples (8) to (11) are lower in the PM-burning temperature as compared to the Comparative sample (1). In addition, the Samples (8) and (10) are lower in the HC-purifying temperature and the CO-purifying temperature as compared to the Sample (11), the Samples (8) and (9) are lower in the HC-purifying temperature and the CO-purifying temperature as compared to the Sample (10), and the Samples (8) is lower in the HC-purifying temperature and the CO-purifying temperature as compared to the Sample (9). Thus, when the ratio of the support amount of potassium in the upstream section 1a with respect to the support amount of potassium in the downstream section 1b is increased, the HC-purifying temperature and the CO-purifying temperature are lowered.

It is noted that only the alkali metal is exemplified herein as the alkali metal and/or alkaline-earth metal, almost the same results as described above can be obtained when an alkaline-earth element or a mixture of an alkali metal and an alkaline-earth metal is used.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. An exhaust gas-purifying catalyst comprising:
a filter substrate in which upstream and downstream cells separated by a porous wall are formed, the upstream cell being open on an upstream side of the filter substrate and closed on a downstream side of the filter substrate, and the downstream cell being closed on the upstream side and open on the downstream side;
a precious metal supported by the filter substrate; and
an alkaline metal and/or alkaline-earth metal supported by the filter substrate, a support amount of the alkaline metal and/or alkaline-earth metal per unit volume of the filter substrate being greater in an upstream section of the filter substrate than in a downstream section of the filter substrate.

2. The exhaust gas-purifying catalyst according to claim 1, wherein the support amount in the upstream section is at least three times the support amount in the downstream section.

3. The exhaust gas-purifying catalyst according to claim 2, wherein a length of the upstream section is 1/2 to 1/10 of a length of the filter substrate.

4. The exhaust gas-purifying catalyst according to claim 3, wherein the support amount in the upstream section is 0.01 mol/L or more.

5. The exhaust gas-purifying catalyst according to claim 1, wherein a length of the upstream section is 1/2 to 1/10 of a length of the filter substrate.

6. The exhaust gas-purifying catalyst according to claim 1, wherein the support amount in the upstream section is 0.01 mol/L or more.
